# EUROPEAN PATENT SPECIFICATION

(11) **EP 2 125 359 B1**
(45) Date of publication and mention of the grant of the patent: **27.07.2016**
(21) Application number: 08726128.5
(22) Date of filing: 27.02.2008
(51) Int. Cl.: B32B 5/02, B82Y 30/00, B32B 33/00

(54) **MATERIALS FOR THERMAL PROTECTION AND METHODS OF MANUFACTURING SAME**
THERMALSCHUTZMATERIALIEN UND VERFAHREN ZU IHRER HERSTELLUNG
MATÉRIAUX POUR PROTECTION THERMIQUE ET PROCÉDÉS DE FABRICATION DE CEUX-CI

(30) Priority: 27.02.2007 US 903767 P
(43) Date of publication of application: 02.12.2009
(60) Divisional application: 15178317.2
(73) Proprietor: Nanocomp Technologies, Inc., Concord, NH 03301 (US)
(72) Inventor: LASHMORE, David, S., Lebanon, NH 03766 (US)
(74) Representative: Atkinson, Jonathan David Mark
(86) International application number: PCT/US2008/002548
(87) International publication number: WO 2008/106143

(56) References cited:
- WO-A1-2007/003879
- WO-A2-2006/069007
- WO-A2-2006/099156
- US-A1- 2004 235 379
- US-A1- 2005 281 999

## Description

### TECHNICAL FIELD

The present invention relates to flame resistant materials, and more particularly, heat and flame resistant materials manufactured from a non-woven sheet of nanotubes.

### BACKGROUND ART

The development of fire resistant textiles such as Nomex® has brought significant protection to a number of people in hazardous environments, such as race drivers, fire fighters and military personnel. Nomex® is a flame retardant meta-aramid material marketed and first discovered by DuPont in the 1970s. This heat and flame resistant material does not burn but rather reacts to severe heat by charring. However, Nomex® is not electrically conductive. Rather, it is electrically insulating. In addition, Nomex® can be thermally conductive in a direction normal to a plane of the fabric.

Carbon nanotubes are known to have extraordinary tensile strength, including high strain to failure and relatively high tensile modulus. Carbon nanotubes may also be highly electrically conductive while being resistant to fatigue, radiation damage, and heat.

Within the last fifteen (15) years, as the properties of carbon nanotubes have been better understood, interests in carbon nanotubes have greatly increased within and outside of the research community. One key to making use of these properties is the synthesis of nanotubes in sufficient quantities for them to be broadly deployed. For example, large quantities of carbon nanotubes may be needed if they are to be used as high strength components of composites in macroscale structures (i.e., structures having dimensions greater than 1 cm.)

One common route to nanotube synthesis can be through the use of gas phase pyrolysis, such as that employed in connection with chemical vapor deposition. In this process, a nanotube may be formed from the surface of a catalytic nanoparticle. Specifically, the catalytic nanoparticle may be exposed to a gas mixture containing carbon compounds serving as feedstock for the generation of a nanotube from the surface of the nanoparticle.

Recently, one promising route to high-volume nanotube production has been to employ a chemical vapor deposition system that grows nanotubes from catalyst particles that "float" in the reaction gas. Such a system typically runs a mixture of reaction gases through a heated chamber within which the nanotubes may be generated from nanoparticles that have precipitated from the reaction gas. Numerous other variations may be possible, including ones where the catalyst particles may be pre-supplied.

In cases where large volumes of carbon nanotubes may be generated, however, the nanotubes may attach to the walls of a reaction chamber, resulting in the blockage of nanomaterials from exiting the chamber. Furthermore, these blockages may induce a pressure buildup in the reaction chamber, which can result in the modification of the overall reaction kinetics. A modification of the kinetics can lead to a reduction in the uniformity of the material produced.

An additional concern with nanomaterials may be that they need to be handled and processed without generating large quantities of airborne particulates, since the hazards associated with nanoscale materials are not yet well understood.

The processing of nanotubes or nanoscale materials for macroscale applications has steadily increased in recent years. The use of nanoscale materials in textile fibers and related materials has also been increasing. In the textile art, fibers that are of fixed length and that have been processed in a large mass may be referred to as staple fibers. Technology for handling staple fibers, such as flax, wool, and cotton has long been established. To make use of staple fibers in fabrics or other structural elements, the staple fibers may first be formed into bulk structures such as yarns, tows, or sheets, which then can be processed into the appropriate materials.

Accordingly, it would be desirable to provide a material that can take advantage of the characteristics and properties of carbon nanotubes, so that a heat and flame resistant material can be manufactured in bulk or as textile-like in a cost-effective manner, while being electrically conductive, as well as capable of being bonded to or incorporated into existing fabrics or materials.

WO 2006/099156 discloses a method for forming a thin film material which comprises depositing solid particles from a flowing suspension or aerosol onto a filter and next adhering the solid particles to a second substrate using an adhesive.

### SUMMARY OF THE INVENTION

The present invention, in one embodiment, provides a thermal protection material. According to the present invention, there is provided a thermal protection material comprising: a non-woven sheet of nanotubes; a substrate material adjacent to the non-woven sheet; and an adhesive material positioned between the non-woven sheet and the substrate material, characterized in that the non-woven nanotube sheet has a density ranging from at least about 0.1 mg/cm² to over 5 mg/cm², and/or a nominal strength ranging from about 69 MPa (10K psi) to about 138 MPa (20K psi), and/or a tensile strength over 40 Mpa.

Examples of a substrate material includes Nomex® or any other type of textile or substrate for which thermal protection is desired or which can be part of a larger engineered thermal protection package. The thermal protection material can further include a bonding agent, for instance, an adhesive having a glassy carbon precursor material, situated between the non-woven sheet and the substrate. In an embodiment, an adhesive that can form a char, rather than melts or destructively burns in the presence of relatively high heat, may be used. Examples of such adhesives include PVA (e.g., PVA sheet glue which can pyrolyze upon heating), furfuryl alcohol (e.g., thin films of furfuryl alcohol catalyzed with malic acid (3%) with not only cross-links, but also forms glassy carbon, which itself is oxidation resistant) or RESOL® resin, which can also be a glassy carbon precursor.

The present invention, in another embodiment, provides a thermal protection material having enhanced textile strength and oxidation resistance. The thermal protection material includes a first layer having a first non-woven nanotube sheet, a first substrate material adjacent the first non-woven sheet, and an adhesive material positioned between the first non-woven sheet and the first substrate material. The thermal protection material also includes a second layer adjacent to the first layer. The second layer, in an embodiment, includes a second non-woven nanotube sheet, a second substrate material adjacent the non-woven sheet, and an adhesive material positioned between the second non-woven sheet and the second substrate material. The second layer further includes a coating about the second substrate material. The coating, in an embodiment, may be Polyureamethylvinylsilazane CerasetTM-SN or Polycarbosilane or similar compounds. The material may be provided with an increased strength. In one embodiment the strength of the coated material may range from about 30 MPa to over about 300 MPa.

The present disclosure also provides methods for manufacturing a thermal protection material. The method includes initially providing a non-woven sheet of nanotubes. Next, a substrate material may be bonded to the non-woven sheet with an adhesive material positioned between the non-woven sheet and the substrate material. Thereafter, the assembly may be pyrolyzed in an inert atmosphere to form a thin glassy carbon bonding layer between the substrate material and the non-woven sheet.

Also disclosed is an apparatus for forming a nanofibrous non-woven sheet including a housing having an inlet through which a flow of synthesized nanotubes can enter into the apparatus. The apparatus also includes an assembly situated substantially parallel to the flow of synthesized nanotubes for collecting the nanotubes entering through the inlet. The assembly may include the ability to translate from one side to an opposite side of the housing in a direction substantially transverse to the flow of the synthesized nanotubes. The assembly may also include sliding arms, so that the assembly can be pulled from housing for ease of removal of the non-woven sheet of nanotubes. The apparatus further includes a moving surface positioned about the assembly onto which synthesized nanotubes can be substantially continuously deposited, so as to form a non-woven sheet. This moving surface can be made from a material capable of attracting the nanotubes onto the surface. The apparatus can also be provided with an outlet for removing the non-woven sheet of nanotubes from housing.

### BRIEF DESCRIPTION OF DRAWINGS

Figs. 1-2 illustrate a system (which is not part of the present invention) for formation and harvesting of nanofibrous non-woven materials.
Fig. 2A illustrates an alternate system (which is not part of the present invention) for formation and harvesting of nanofibrous non- woven materials.
Fig. 3 illustrates a nanofibrous non-woven sheet (which is not part of the present invention) generated from the system shown in Figs. 1, 2, and 2A.
Fig. 4 illustrates a thermal protection material of the present invention and the aluminum foil on which it is placed after exposure to an MAAP flame.
Fig. 5 illustrates the results ability of the thermal protection material in Fig. 4 to protect the aluminum foil when exposed to an MAAP flame.

### DESCRIPTION OF SPECIFIC EMBODIMENTS

Nanotubes for use in connection with the present invention may be fabricated using a variety of approaches. Presently, there exist multiple processes and variations thereof for growing nanotubes. These include: (1) Chemical Vapor Deposition (CVD), a common process that can occur at near ambient or at high pressures, (2) Arc Discharge, a high temperature process that can give rise to tubes having a high degree of perfection, and (3) Laser ablation. It should be noted that although reference is made below to nanotube synthesized from carbon, other compound(s) may be used in connection with the synthesis of nanotubes for use with the present invention. For instance, the present process may be implemented in a manner which includes chemically modifying the carbon in whole or in part, or by replacing the carbon with, for instance, boron or nitrogen, so that nanotubes can be generated containing elements other than carbon.

The present invention, in one embodiment, employs a CVD process or similar gas phase pyrolysis procedures well known in the industry to generate the appropriate nanotubes. In particular, since growth temperatures for CVD can be comparatively low ranging, for instance, from about 400°C to about 1400°C, carbon nanotubes, both single wall (SWNT) or multiwall (MWNT), may be grown, in an embodiment, from nanostructural catalyst particles supplied by reagent carbon-containing gases (i.e., gaseous carbon source).

Moreover, the strength of the SWNT and MWNT generated for use in connection with the present invention may be about 30 GPa maximum. Strength, as should be noted, is sensitive to defects. However, the elastic modulus of the SWNT and MWNT fabricated for use with the present invention is typically not sensitive to defects and can vary from about 1 to about 1.5 TPa. Moreover, the strain to failure, which generally can be a structure sensitive parameter, may range from a few percent to a maximum of about 10% in the present invention.

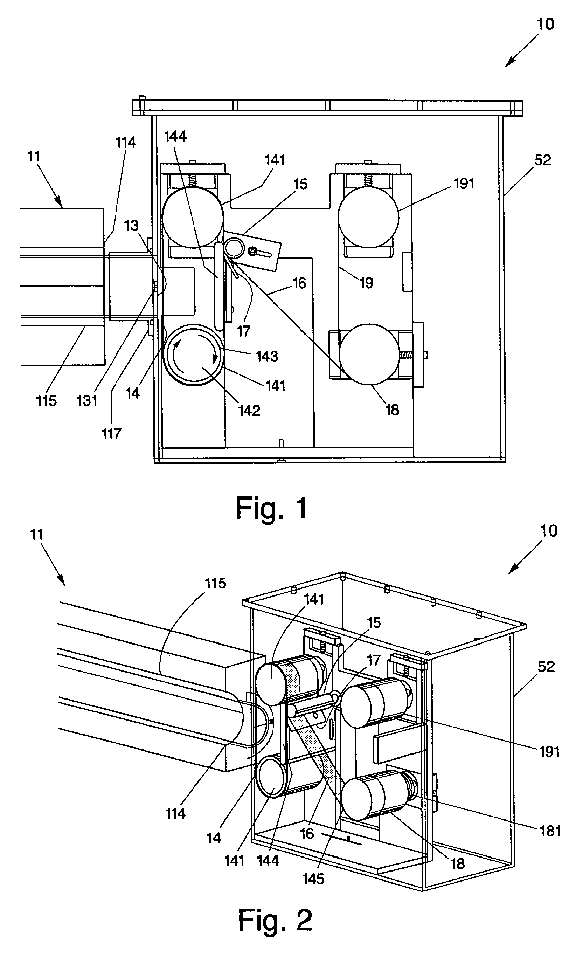

Referring now to Figs. 1-2, there is illustrated a system, 10 (not forming part of the present invention), for collecting synthesized nanofibrous or nanomaterials, such as nanotubes, made from a CVD process within a synthesis chamber 11 , and for subsequently forming bulk fibrous structures or materials from the nanotubes. In particular, system 10 may be used in the formation of a substantially continuous non-woven sheet generated from compacted and intermingled nanotubes and having sufficient structural integrity to be handled as a sheet.

System 10 may be coupled to a synthesis chamber 11. Synthesis chamber 11, in general, includes an entrance end, into which reaction gases may be supplied, a hot zone, where synthesis of extended length nanotubes may occur, and an exit end 114 from which the products of the reaction, namely the extended length nanotubes and exhaust gases, may exit and be collected. Synthesis chamber 11 may include a quartz or ceramic tube 115, extending through in a furnace and may include flanges 117 provided at exit end 114 and entrance end for sealing tube 115. Although illustrated generally in Fig. 1, it should be appreciated that other configurations may be employed in the design of synthesis chamber 11.

System 10 includes a housing 52. Housing 52, as illustrated in Fig. 1, may be substantially airtight to minimize the release of potentially hazardous airborne particulates from within the synthesis chamber 11 into the environment, and to prevent oxygen from entering into the system 10 and reaching the synthesis chamber 11. In particular, the presence of oxygen within the synthesis chamber 11 can affect the integrity and compromise the production of the nanotubes.

System 10 may also include an inlet 13 for engaging the flanges 117 at exit end 114 of synthesis chamber 11 in a substantially airtight manner. Inlet 13 may include at least one gas exhaust 131 through which gases and heat may leave the housing 52. Gas exiting from exhaust 131, may be allowed to pass through a liquid, such as water, or a filter to collect nanomaterials not gathered upstream of the exhaust 131. In addition, the exhaust gas may be treated in a manner similar to that described above. Specifically, the exhaust gas may be treated with a flame in order to de-energize various components of the exhaust gas, for instance, reactive hydrogen may be oxidized to form water.

System 10 may further include a moving surface, such as belt 14, situated adjacent inlet 13 for collecting and transporting the nanomaterials, i.e., nanotubes, from exit end 114 of synthesis chamber 11. To collect the nanomaterials, belt 14 may be positioned at an angle substantially transverse to the flow of gas carrying the nanomaterials from exit end 114 to permit the nanomaterials to be deposited on to belt 14. Belt 14 may be positioned substantially perpendicularly to the flow of gas and may be porous in nature to allow the flow of gas carrying the nanomaterials to pass therethrough and to exit from the synthesis chamber 11. The flow of gas from the synthesis chamber 11 may, in addition, exit through exhaust 131 in inlet 13. In addition, belt 14 may be made from a ferromagnetic material, so as to attract the nanomaterials thereonto.

To carry the nanomaterials away from the inlet 13 of system 10, belt 14 may be designed as a continuous loop similar to a conventional conveyor belt. To that end, belt 14 may be looped about opposing rotating elements 141 and may be driven by a mechanical device, such as an electric motor 142, in a clockwise manner, as illustrated by arrows 143. Alternatively, a drum (not shown) may be used to provide the moving surface for transporting the nanomaterial. Such a drum may also be driven by a mechanical device, such as electric motor 142. Motors 142 may be controlled through the use of a control system, similar to that used in connection with mechanical drives (not shown), so that tension and velocity can be optimized.

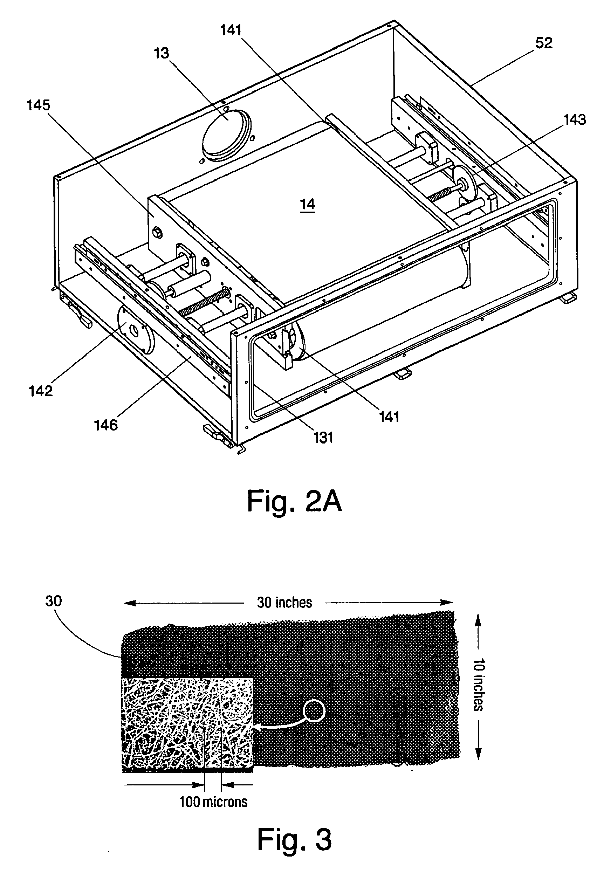

Still looking at Fig. 1, system 10 may include a pressure applicator, such as roller 15, situated adjacent belt 14 to apply a compacting force (i.e., pressure) onto the collected nanomaterials. In particular, as the nanomaterials get transported toward roller 15, the nanomaterials on belt 14 may be forced to move under and against roller 15, such that a pressure may be applied to the intermingled nanomaterials while the nanomaterials get compacted between belt 14 and roller 15 into a coherent substantially-bonded planar non-woven sheet 16 (see Fig. 2). To enhance the pressure against the nanomaterials on belt 14, a plate 144 may be positioned behind belt 14 to provide a hard surface against which pressure from roller 15 can be applied. It should be noted that the use of roller 15 may not be necessary should the collected nanomaterials be ample in amount and sufficiently intermingled, such that an adequate number of contact sites exists to provide the necessary bonding strength to generate the non-woven sheet 16.

To disengage the non-woven sheet 16 of intermingled nanomaterials from belt 14 for subsequent removal from housing 52, a scalpel or blade 17 may be provided downstream of the roller 15 with its edge against surface 145 of belt 14. In this manner, as non-woven sheet 16 moves downstream past roller 15, blade 17 may act to lift the non-woven sheet 16 from surface 145 of belt 14.

Additionally, a spool or roller 18 may be provided downstream of blade 17, so that the disengaged non-woven sheet 16 may subsequently be directed thereonto and wound about roller 18 for harvesting. In an embodiment, roller 18 may be made from a ferromagnetic material to attract the nanomaterials in non-woven sheet 16 thereonto. Of course, other mechanisms may be used, so long as the non-woven sheet 16 can be collected for removal from the housing 52 thereafter. Roller 18, like belt 14, may be driven, in an embodiment, by a mechanical drive, such as an electric motor 181, so that its axis of rotation may be substantially transverse to the direction of movement of the non-woven sheet 16.

In order to minimize bonding of the non-woven sheet 16 to itself as it is being wound about roller 18, a separation material 19 (see Fig. 2) may be applied onto one side of the non-woven sheet 16 prior to the sheet 16 being wound about roller 18. The separation material 19 may be one of various commercially available metal sheets or polymers that can be supplied in a continuous roll 191. To that end, the separation material 19 may be pulled along with the non-woven sheet 16 onto roller 18 as sheet 16 is being wound about roller 18. It should be noted that the polymer comprising the separation material 19 may be provided in a sheet, liquid, or any other form, so long as it can be applied to one side of non-woven sheet 16. Moreover, since the intermingled nanotubes within the non-woven sheet 16 may contain catalytic nanoparticles of a ferromagnetic material, such as Fe, Co, Ni, etc., the separation material 19 may be a non-magnetic material, e.g., conducting or otherwise, so as to prevent the non-woven sheet 16 from sticking strongly to the separation material 19.

Furthermore, system 10 may be provided with a control system (not shown), similar to that in system 10, so that rotation rates of mechanical drives 142 and 181 may be adjusted accordingly. The control system may be designed to receive data from position sensors, such as optical encoders, attached to each of mechanical drives 142 and 181. Subsequently, based on the data, the control system may use a control algorithm in order to modify power supplied to each drive in order to control the rate of each drive so that they substantially match the rate of nanotube collection on belt 14 to avoid compromising the integrity of the non-woven sheet as it is being wound about the spool. Additionally, the control system can act to synchronize a rate of spin of the roller 18 to that of belt 14. Tension of the non-woven sheet 16 can be reset in real time depending on the velocity values, so that the tension between the belt 14 and roller 18 can be kept within a set value.

The control system can also vary the rate between the roller 18 and belt 14, if necessary, to control the up-take of the non-woven sheet 16 by roller 18. In addition, the control system can cause the roller 18 to adjust slightly back and forth along its axis, so as to permit the non-woven sheet 16 to evenly remain on roller 18.

To the extent desired, an electrostatic field (not shown) may be employed to align the nanotubes, generated from synthesis chamber 11, approximately in a direction of belt motion. The electrostatic field may be generated by placing, for instance, two or more electrodes circumferentially about the exit end 114 of synthesis chamber 11 and applying a high voltage to the electrodes. The voltage can vary from about 10 V to about 100 kV, and preferably from about 4 kV to about 6 kV. If necessary, the electrodes may be shielded with an insulator, such as a small quartz or other suitable insulator. The presence of the electric field can cause the nanotubes moving therethrough to substantially align with the field, so as to impart an alignment of the nanotubes on moving belt 14.

Alignment of the nanotubes may also be implemented through the use of chemical and/or physical processes. For instance, the non-woven nanotubes may be slightly loosened with chemical and physically stretched to substantially align the nanotubes along a desired direction.

Referring now to Fig. 2A, a modified housing for collecting nanomaterials, e.g., nanotubes, may be used. The modified housing 52 in Fig. 2A may include an inlet 13, through which the nanomaterials enter from the synthesis chamber 11 of system 10, and an outlet 131, through which non-woven sheet 16 may be removed from housing 52. In one embodiment, housing 52 may be designed to be substantially airtight to minimize the release of potentially hazardous airborne particulates from within the synthesis chamber 11 into the environment, and to prevent oxygen from entering into the system 10 and reaching the synthesis chamber 11. In particular, the presence of oxygen within the synthesis chamber 11 can affect the integrity and compromise the production of the nanotubes.

Housing 52 of Fig. 2A may further include an assembly 145 having a moving surface, such as belt 14. As illustrated, belt 14 may be situated adjacent inlet 13 for collecting and transporting the nanomaterials, i.e., nanotubes, exiting from synthesis chamber 11 into the housing 52. In the system of Fig. 2A, belt 14, and thus assembly 145, may be situated substantially parallel to the flow of gas carrying the nanomaterials entering into housing 52 through inlet 13, so as to permit the nanomaterials to be deposited on to belt 14. Belt 14 may be made to include a material, such as a magnetic material, capable of attracting the nanomaterials thereonto. The material can vary depending on the catalyst from which the nanotubes are being generated. For example, if the nanomaterials are generated from using a particle of iron catalyst, the magnetic material may be a ferromagnetic material.

To carry the nanomaterials away from the inlet 13 of housing 52, belt 14 may be designed as a substantially continuous loop similar to a conventional conveyor belt. To that end, belt 14 may be looped about opposing rotating elements 141 and may be driven by a mechanical device, such as rotational gearing 143 driven by a motor located at, for instance, location 142. In addition, belt 14 may be provided with the ability to translate from one side of housing 52 to an opposite side of housing 52 in front of the inlet 13 and in a direction substantially transverse to the flow of nanomaterials through inlet 13. By providing belt 14 with this ability, a relatively wide non-woven sheet 16 may be generated on belt 14, that is relatively wider than the flow of nanomaterials into housing 52. To permit belt 14 to translate from side to side, translation gearing 144 may be provided to move assembly 145 on which rollers 141 and belt 14 may be positioned.

Once sufficient nanomaterials have been deposited on belt 14 to provide the non-woven sheet 16 with an appropriate thickness, the non- woven sheet 16 can be removed from housing 52 of Fig. 2A. To remove a non- woven sheet 16 system 10 may be shut down and the non- woven sheet 16 extracted manually from belt 14 and removed from housing 52 through outlet 131. In order to permit ease of extraction, assembly 145, including the various gears, may be mounted onto a sliding mechanism, such as sliding arms 146, so that assembly 145 may be pulled from housing 52 through outlet 131. Once the non-woven sheet has been extracted, assembly 145 may be pushed back into housing 52 on sliding arms 146. Outlet 131 may then be closed to provide housing 52 with a substantially airtight environment for a subsequent run.

By providing the nanomaterials in a non-woven sheet, the bulk nanomaterials can be easily handled and subsequently processed for end use applications, including heat and thermal management and protection, among others.

It should be appreciated that the non-woven sheet of nanotubes for use in the present invention can be made by a CVD process, non-woven sheets of nanotubes, such as bucky paper and its derivatives, as well as other non-woven sheets of nanotubes available in the art can potentially be used.

### Example I

Non-woven sheets of carbon nanotubes are created by a CVD process using system 10 shown in Figs. 1, 2 and 2A. Nanotubes are created in the gas phase and deposited on a moving belt as noted above. A plurality of layers may be necessary to build the non-woven sheet to a density, in an embodiment, of about 1 mg/cm². Density of the non-woven sheet can be controlled within a wide range, for instance, from at least about 0.1 mg/cm² to over 5 mg/cm². An example of such a non-woven sheet is shown in Fig. 3 as item 30.

The bulk nanomaterials from which the non-woven sheet 30 is made can also provide sheet 30 with high strength. In an embodiment, the non-woven sheet 30, made from either single wall (SWNT) or multiwall (MWNT) carbon nanotubes, may be provided with a nominal strength ranging from about 69 MPa (10K psi) to about 138 MPa (20K psi), so that it can be easily handled while being substantially flexible. Non-woven sheet 30 may have a tensile strength that can be over 40 MPa for non-woven sheet 30 made from SWNT.

The non-woven sheet 30 manufactured from system 10 and the process disclosed above may also be substantially pure in carbon nanotubes, and can maintain its shape with substantially no bonding agents present. The ability of sheet 30 to maintain its shape, in an embodiment, comes from the pressure applied by roller 15 (see above) to the intermingled carbon nanotubes, so as to compact the nanotubes between belt 14 and roller 15 into a coherent substantially-bonded planar non-woven sheet. As for its purity, it should be noted that although non-woven sheets with substantially pure carbon nanotubes can be manufactured, non-woven sheets having residual catalyst in the carbon nanotubes made from the CVD process described above can also be used. Typically, residual catalyst (i.e., metal catalyst), in such non-woven sheets, can range less than about 2 atomic percent. Using non-woven sheets with residual catalyst, in an embodiment, can reduce processing costs.

The non-woven carbon nanotube sheet 30 of the present invention, in an embodiment, differs from Nomex® in that non-woven sheet 30 has been converted to carbon, whereas Nomex®, in its commercial form, is not. In addition, since both the SWNT and MWNT from which the non-woven sheet 30 may be manufactured are electrically conductive, unlike Nomex®, the non- woven sheet 30 can also be electrically conductive.

Furthermore, due to the thermal conduction characteristics of carbon nanotubes, the non-woven sheet 30 can provide thermal protection by being thermally conductive within the plane of the sheet 30, while not being thermally conductive in a direction substantially normal to this plane. In particular, in the presence of a heat source, the carbon nanotubes in non-woven sheet 30 may act to conduct heat substantially rapidly away from the heat source, along the plane of the sheet 30, and toward a larger and relatively cooler area, for instance a heat sink. Moreover, because carbon nanotubes can be substantially resistant to high temperature oxidation, the non-woven sheet 30 made from carbon nanotubes generally can withstand (i.e., does not burn) temperatures up to about 500° C.

### Example II

In order to employ the non-woven sheet 30 in a thermal protection or management application, the non-woven sheet 30, is bonded to a substrate material. Examples of a substrate material includes Nomex® or any other type of textile or substrate for which thermal protection is desired, including metal, such as aluminum foil, structural aluminum components, stainless steel, Incontel, titanium, or the like.

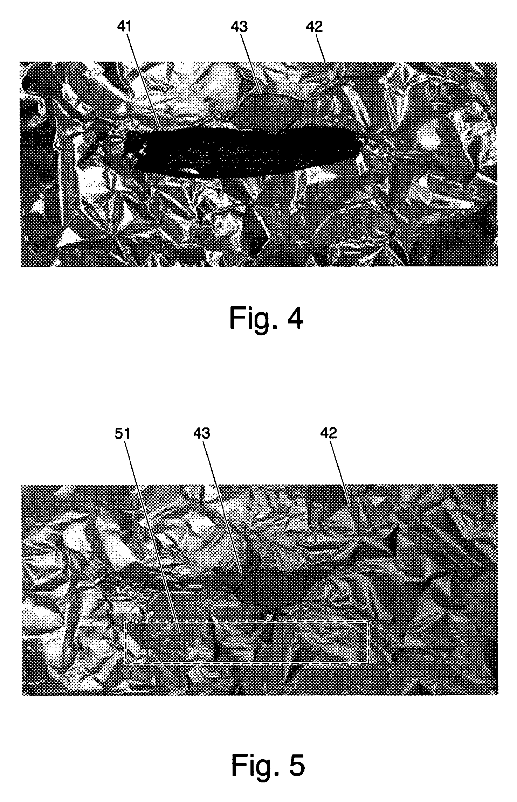

With reference now to Fig. 4, in accordance with one embodiment, a non-woven sheet of the present invention may be bonded to a commercial grade Nomex® basket weave, 8.4 oz/yd, and thickness of 0.0152 inches to provide a thermal protection sheet 41. Bonding of the non-woven sheet to the substrate material can be accomplished through the use of an adhesive having a glassy carbon precursor material. In an embodiment, an adhesive that can form a char, rather than melts or destructively burns in the presence of relatively high heat may be used. Examples of such adhesives include PVA (e.g., PVA sheet glue which can pyrolyze upon heating), furfuryl alcohol (e.g., thin films of furfuryl alcohol catalyzed with malic acid (3%) with not only cross-links, but also forms glassy carbon, which itself is oxidation resistant) or RESOL® resin, which can also be a glassy carbon precursor.

The thermal protection sheet 41 may thereafter be bonded to an aluminum foil 42. In particular, aluminum foil 42 may be coated with an adhesive having a glassy carbon precursor material, such as RESOL® resin, malic acid catalyzed (3%) furfuryl alcohol, or PVA. Next, the thermal protection sheet 41 may be placed on the adhesive with the glassy carbon precursor and subsequently bonded to the aluminum foil 42. Although aluminum foil is disclosed herein, it should be appreciated that silver foil or other noble metal foils, such as gold or copper can be used.

In an embodiment, the bonding step for the non-woven sheet to Nomex® and the resulting thermal protection sheet 41 to the aluminum foil 42 may include slowly pyrolyzing the glassy carbon material at about 450°C in an inert atmosphere to form a thin glassy carbon bonding layer. Alternatively, pyrolyzation can be carried out in a vacuum. It should be noted that generally glassy carbon may be partially formed at this lower temperature, and that the temperature may need to be about 1000° C to substantially completely form the glassy carbon material.

The thermal protection sheet 41, along with the aluminum foil 42 on which sheet 41 is placed was exposed to an MAAP flame. As illustrated in Fig. 4, the MAAP flame was sufficiently hot to melt a hole 43 in the aluminum foil 42. However, as shown in Fig. 5, an area 51, indicated by dashed lines on the aluminum foil 42 and over which the thermal protection sheet 41 was placed, exhibited minimal damage next to hole 43.

In one embodiment, the ability of the thermal protection sheet 41 to protect can be its ability to transfer heat laterally from the heat source to a heat dissipation area. In addition, such a thermal protection sheet 41 can act to transfer heat in a substantially transverse direction with the plane of sheet 41. To that end, sheet 41 may be designed to be placed between a heat source and a heat dissipation source, so as to serve to transfer heat from the heat source to the heat dissipation source.

### Example III

In another embodiment, the non-woven carbon nanotube sheet, such as sheet 30, or the thermal protection sheet 41 can be coated with Polyureamethylvinylsilazane Ceraset™ (Kion Corporation, Huntingdon Valley, PA) (referred to hereinafter as "Ceraset") to enhance the strength of the non-woven sheet or thermal protection sheet 41 and its oxidation resistance characteristics. Of course, the non-woven carbon nanotube sheet or the thermal protection sheet 41 may be used without a coating of this material.

To form the coating material, the Ceraset may be dissolved in acetone solutions in concentrations ranging from about 1% to about 20%, preferably around 5% by volume. Next, the solution may be coated onto the non-woven carbon nanotube sheet or the thermal protection sheet 41, and then allowed to air dry. Thereafter, the coated non-woven sheet or the coated thermal protection sheet 41 may be hot pressed at an elevated temperature ranging from about 50°C to about 300°C, and preferably around 150°C, for about 60 minutes. The pressure at which the hot pressing may be carried out can range from about 6.9 MPa (1,000 psi) to about 138 MPa (20,000 psi). After hot-pressing, the resulting coated non-woven sheet or the coated thermal protection sheet 41 may be ready to use.

The strength of this coated non-woven sheet or thermal protection sheet 41 can be increased as a result of this process from about 30 MPa to over about 300 MPa. In addition, exposure of the Ceraset coated non-woven sheet or thermal protection sheet 41 to a MAAP flame does not result in burning of the material. Rather, the silazane is converted to silicone oxide and most probably forms regions of well bonded silicon carbon locking the structure together. In one embodiment, a non-woven sheet coated with Ceraset can withstand heat over 1000°C or higher without burning.

### Example IV

Another application of the coating technology described in Example II involves layering the Ceraset coated thermal protection sheet 41 on an untreated thermal protection sheet 41 in a layered structure (i.e., sandwiching at least one thermal protection sheet between two urea silazane coated thermal protection sheets). This type of layered structure, in an embodiment, is expected to result in a substantially oxidation resistant outer layer (i.e., the Ceraset coated thermal protection sheets) and a very thermally conductive inner layer (i.e., the untreated thermal protection sheet), so that heat can be efficiently removed without burning.

Although reference is made to the thermal protection sheets, it should be appreciated that, similar Example III, non-woven sheets, such as sheet 30, may be used instead. In addition, instead of Polyureamethylvinylsilazane, Polycarbosilane or other similar compounds may be used in its place in both Examples III and IV. Furthermore, the coated/treated material in Examples III and IV may be made from pitch or PAN-based graphite fibers treated with polyureamethylvinylsilazane to enhance bonding.

In an embodiment, the coated material may be bonded to a metallic matrix composite or a ceramic composite. The presence of the polyureamethylvinylsilazane coating on the material can enhance the bonding of the material to the metallic matrix or ceramic composite.

## Claims

1. A thermal protection material comprising:
a non-woven sheet of nanotubes;
a substrate material adjacent to the non-woven sheet; and
an adhesive material positioned between the non-woven sheet and the substrate material, **characterized in that** the non-woven nanotube sheet has a density ranging from at least about 0.1 mg/cm² to over 5 mg/cm², and/or a nominal strength ranging from about 69 MPa (10K psi) to about 138 MPa (20K psi), and/or a tensile strength over 40 MPa.

2. A material as set forth in claim 1, wherein the substrate material includes one of Nomex®, aluminum foil, structural aluminum component, stainless steel, Incontel, titanium, or any other type of textile, metal, or substrate for which thermal protection is desired.

3. A material as set forth in claim 1 or claim 2, wherein the adhesive material includes a glassy carbon precursor material, preferably wherein the adhesive material includes one of PVA, furfuryl alcohol, or RESOL® resin.

4. A material as set forth in any one of claims 1 to 3, wherein the material can withstand heat up to about 500° C without substantially burning, preferably wherein the non-woven sheet is coated with Ceraset and wherein the material can withstand heat over 1000° C or more without substantially burning, and/or wherein the material has an increased strength of from about 30 MPa to over about 300 MPa.

5. A material as set forth in any one of claims 1 to 4, further including a coating that can enhance strength and oxidation resistance, preferably wherein the coating includes one of Polyureamethylvinylsilazane Ceraset TM-SN, Polycarbosilane, or a similar compound.

6. A material as set forth in claim 1 designed to be placed between a heat source and a heat dissipation source, so as to serve to transfer heat from the heat source to the heat dissipation source.

7. A material as set forth in claim 1 wherein the heat transfer capability of the non-woven nanotube sheet occurs in a lateral direction, preferably wherein the heat transfer capability of the non-woven nanotube sheet occurs in a direction within a plane of the sheet.

8. The material as set forth in claim 1, wherein the material forms a first layer and further comprises a second layer, wherein the second layer is adjacent to the first layer, the second layer having a second non-woven sheet of nanotubes, a second substrate material adjacent to the second non-woven sheet, an adhesive material positioned between the second non-woven sheet and the substrate material, and a coating about the second substrate material.

9. The material as set forth in claim 8, wherein the substrate material includes one of Nomex®, aluminum foil, structural aluminum component, stainless steel, Incontel, titanium, or any other type of textile, metal, or substrate for which thermal protection is desired.

## Patentansprüche

1. Wärmeschutzmaterial, umfassend:
eine Vliesbahn aus Nanoröhren;
ein Substratmaterial benachbart zu der Vliesbahn; und
ein Klebematerial, das zwischen der Vliesbahn und dem Substratmaterial angeordnet ist, **dadurch gekennzeichnet, dass** die Nanoröhrenvliesbahn eine Dichte in einem Bereich von wenigstens etwa 0,1 mg/cm² bis über 5 mg/cm² und/oder eine Nennfestigkeit, die in einem Bereich von etwa 69 MPa (10K psi) bis etwa 138 MPa (20K psi) liegt, und/oder eine Zugfestigkeit von über 40 MPa aufweist.

2. Material nach Anspruch 1, wobei das Substratmaterial eins von Nomex®, Aluminiumfolie, struktureller Aluminiumkomponente, Edelstahl, Incontel, Titan oder eine beliebige andere Art von Textilie, Metall oder Substrat ist, für die Wärmeschutz gewünscht wird.

3. Material nach Anspruch 1 oder Anspruch 2, wobei das Klebematerial ein glasiges Kohlenstoffvorläufermaterial beinhaltet, wobei das Klebematerial vorzugsweise eins von PVA, Furfurylalkohol oder RESOL®-Harz beinhaltet.

4. Material nach einem der Ansprüche 1 bis 3, wobei das Material Wärme bis zu etwa 500° C standhalten kann, ohne im Wesentlichen zu brennen, wobei die Vliesbahn vorzugsweise mit Ceraset beschichtet ist und wobei das Material Wärme über 1000° C oder mehr standhalten kann, ohne im Wesentlichen zu brennen, und/oder wobei das Material eine erhöhte Festigkeit von etwa 30 MPa bis zu über etwa 300 MPa aufweist.

5. Material nach einem der Ansprüche 1 bis 4, ferner beinhaltend eine Beschichtung, die die Festigkeit und Oxidationsbeständigkeit erhöht, wobei die Beschichtung vorzugsweise eins von Polyureamethylvinylsilazan-Ceraset TM-SN, Polycarbosilan oder einer ähnlichen Verbindung beinhaltet.

6. Material nach Anspruch 1, das dazu ausgelegt ist, zwischen einer Wärmequelle und einer Wärmeableitungsquelle angeordnet zu sein, um der Wärmeübertragung von der Wärmequelle an die Wärmeabgabequelle zu dienen.

7. Material nach Anspruch 1, wobei die Wärmeübertragungsfähigkeit der Nanoröhrenvliesbahn in einer lateralen Richtung erfolgt, wobei die Wärmeübertragungsfähigkeit der Nanoröhrenvliesbahn vorzugsweise in einer Richtung innerhalb einer Ebene der Bahn erfolgt.

8. Material nach Anspruch 1, wobei das Material eine erste Schicht bildet und ferner eine zweite Schicht umfasst, wobei die zweite Schicht zur ersten Schicht benachbart ist, wobei die zweite Schicht eine zweite Vliesbahn aus Nanoröhren, ein zweites Substratmaterial benachbart zu der zweiten Vliesbahn, ein Klebematerial, das zwischen der zweiten Vliesbahn und dem Substratmaterial angeordnet ist, und eine Beschichtung um das zweite Substratmaterial herum aufweist.

9. Material nach Anspruch 8, wobei das Substratmaterial eins von Nomex®, Aluminiumfolie, struktureller Aluminiumkomponente, Edelstahl, Incontel, Titan oder eine beliebige andere Art von Textilie, Metall oder Substrat ist, für die Wärmeschutz gewünscht wird.

## Revendications

1. Matériau de protection thermique comprenant :
une feuille de nanotubes non tissée ;
un matériau de substrat adjacent à la feuille non tissée ; et
un matériau adhésif positionné entre la feuille non tissée et le matériau de substrat, **caractérisé en ce que** la feuille de nanotube non tissée a une densité entre au moins environ 0,1 mg/cm² et plus de 5 mg/cm², et/ou une résistance nominale entre environ 69 MPa (10K psi) et environ 138 MPa (20K psi), et/ou une résistance à la traction supérieure à 40 MPa.

2. Matériau selon la revendication 1, dans lequel le matériau de substrat comprend l'un des éléments parmi du Nomex®, une feuille d'aluminium, un composant d'aluminium structurel, de l'acier inoxydable, de l'Incontel, du titane, ou tout autre type de textile, de métal, ou de substrat pour lequel une protection thermique est souhaitée.

3. Matériau selon la revendication 1 ou la revendication 2, dans lequel le matériau adhésif comprend un matériau précurseur de carbone vitreux, de préférence dans lequel le matériau adhésif comprend l'un des éléments parmi du PVA, de l'alcool furfurylique, ou de la résine RESOL®.

4. Matériau selon l'une quelconque des revendications 1 à 3, dans lequel le matériau peut résister à la chaleur jusqu'à environ 500 °C sensiblement sans combustion, de préférence dans lequel la feuille non tissée est revêtue de Ceraset et dans lequel le matériau peut résister à la chaleur jusqu'à plus de 1 000 °C ou plus sensiblement sans combustion, et/ou dans lequel le matériau a une résistance accrue d'environ 30 MPa à plus d'environ 300 MPa.

5. Matériau selon l'une quelconque des revendications 1 à 4, comprenant en outre un revêtement qui peut améliorer la résistance et la résistance à l'oxydation, de préférence dans lequel le revêtement comprend l'un des éléments parmi du polyuréaméthylvinylsilazane Ceraset TM-SN, du polycarbosilane, ou un composé similaire.

6. Matériau selon la revendication 1 conçu pour être placé entre une source de chaleur et une source de dissipation de chaleur, de sorte à servir à transférer la chaleur depuis la source de chaleur vers la source de dissipation de chaleur.

7. Matériau selon la revendication 1 dans lequel la capacité de transfert de chaleur de la feuille de nanotube non tissée se produit dans une direction latérale, de préférence dans lequel la capacité de transfert de chaleur de la feuille de nanotube non tissée se produit dans une direction à l'intérieur d'un plan de la feuille.

8. Matériau selon la revendication 1, dans lequel le matériau forme une première couche et comprend en outre une deuxième couche, dans lequel la deuxième couche est adjacente à la première couche, la deuxième couche ayant une deuxième feuille de nanotubes non tissée, un deuxième matériau de substrat adjacent à la deuxième feuille non tissée, un matériau adhésif positionné entre la deuxième feuille non tissée et le matériau de substrat, et un revêtement autour du deuxième matériau de substrat.

9. Matériau selon la revendication 8, dans lequel le matériau de substrat comprend l'un des éléments parmi du Nomex®, une feuille d'aluminium, un composant d'aluminium structurel, de l'acier inoxydable, de l'Incontel, du titane, ou tout autre type de textile, de métal, ou de substrat pour lequel une protection thermique est souhaitée.
